# EUROPEAN PATENT APPLICATION

(11) **EP 4 014 829 A1**
(43) Date of publication of application: **22.06.2022**
(21) Application number: 19942174.4
(22) Date of filing: 22.11.2019
(51) Int. Cl.: A47L 11/40, A47L 11/24

(54) **SWEEPING ROBOT AND AUTOMATED CONTROL METHOD FOR SWEEPING ROBOT**

(30) Priority: 21.08.2019 CN 201910772998
(71) Applicant: Dreame Innovation Technology (Suzhou) Co., Ltd., Wuzhong District Suzhou Jiangsu 215000 (CN)
(72) Inventor: SHEN, Luokun, Suzhou, Jiangsu 215000 (CN); WU, Jun, Suzhou, Jiangsu 215000 (CN)
(74) Representative: Sun, Yiming
(86) International application number: PCT/CN2019/120427
(87) International publication number: WO 2021/031427

(57) **Abstract**

A sweeping robot and an automated control method for the sweeping robot, related to the technical field of automated cleaning. The sweeping robot comprises: at least one laser transmitting component (120) and at least one image capturing component (130) provided on a housing (110); and a processing component (140) connected with each laser transmitting component (120) and each image capturing component (130), the processing component (140) being used for acquiring a target image captured by the image capturing component (130). When a projection image of a laser projected on a projection point on an obstacle is present in the target image, contour information of the obstacle is acquired; an obstacle type indicated by the contour information is determined; and the sweeping robot is controlled to sweep according to a sweeping mode corresponding to the obstacle type. This solves the problem of poor sweeping effects due to an existing sweeping robot indiscriminately employing an obstacle avoidance strategy whenever an obstacle is detected. Because the sweeping robot is capable of employing different sweeping modes on the basis of different obstacle types instead of indiscriminately avoiding obstacles by not sweeping, sweeping effects of the sweeping robot are increased.

## Description

### TECHNICAL FIELD

The present application relates to a sweeping robot and an automatic control method of the sweeping robot, which belongs to a technical field of automatic cleaning.

### BACKGROUND

With the development of computer technologies, various smart devices with automatic moving functions have appeared, such as sweeping robots.

In the process of working, the sweeping robot usually uses sensors to sense the obstacles ahead. When the sensor senses that there is an obstacle at a certain distance ahead, the sweeping robot moves backward and moves in another direction. When the sensor senses that there is no obstacle ahead, the sweeping robot will move forward and perform cleaning operations. For example, the sweeping robot senses obstacles through ultrasonic and infrared proximity sensors.

However, the sweeping environment of the sweeping robot is complex. The obstacles in front of the sweeping robot may be various, such as: wires, corners, legs of tables and chairs, carpets, etc. Since an obstacle avoidance strategy is adapted to move the sweeping robot for different obstacles, it will lead to a problem of poor cleaning effect.

### SUMMARY

The present application provides a sweeping robot and an automatic control method for the sweeping robot, which can solve the problem that the existing sweeping robot uniformly adopts an obstacle avoidance strategy when detecting an obstacle, resulting in poor cleaning effect. The present application provides the following technical solutions.

In a first aspect, a sweeping robot is provided, and the sweeping robot includes:
a housing;
at least one laser emitting component disposed on the housing, each laser emitting component being adapted to project laser in a travel direction;
at least one image acquisition component disposed on the housing, each image acquisition component being adapted to acquire a target image in the travel direction;
a processing component connected with each laser emitting component and each image acquisition component, the processing component being adapted to acquire the target image collected by the image acquisition component; when there is a projection image of a projection point where the laser is projected onto an obstacle in the target image, a contour information of the obstacle is acquired; a type of the obstacle indicated by the contour information is determined; and the sweeping robot is controlled to clean according to a cleaning mode corresponding to the type of the obstacle.

Optionally, the processing component is adapted to:
determine a distance between the projection point and a target image acquisition component based on a triangulation ranging method for each projection point projected onto the obstacle, the target image acquisition component is an image acquisition component which acquires the projection image of the projection point;
determine three-dimensional coordinates of the projection point relative to the target image acquisition component, according to the distance between the projection point and the target image acquisition component; and
determine the contour information of the obstacle based on the three-dimensional coordinates of a plurality of projection points on the obstacle.

Optionally, the image acquisition component includes a lens and an imaging component, the laser emitting component includes a laser emitting head;
for each projection point projected onto the obstacle, the processing component is adapted to:
acquire a preset distance between the laser emitting head of a target laser emitting component which projects the projection point and the lens of the target image acquisition component;
acquire an included angle between a first connection line and a second connection line, wherein the first connection line is a connection line between the target laser emitting component and the projection point, and the second connection line is a connection line between the laser emitting head of the target laser emitting component and the lens of the target image acquisition component;
acquire a focal length of the target image acquisition component;
acquire an imaging position of the projection image on the imaging component; and
calculate the distance between the projection point and the target image acquisition component, based on a principle of similar triangles, according to the preset distance, the included angle, the focal length and the imaging position.

Optionally, the plurality of the projection points on the obstacle include:
a plurality of projection points generated by a plurality of laser emitting components projecting laser onto the obstacle; and/or
a plurality of projection points generated by a same laser emitting component projecting laser onto a plurality of surfaces of the obstacle; and/or
a plurality of projection points generated by the laser emitting component projecting laser onto the obstacle from different angles, after the sweeping robot drives the same laser emitting component to move.

Optionally, the processing component is adapted to:
control the sweeping robot to enter an obstacle avoidance mode, when the type of the obstacle is a coil type or a wire type;
plan a traversable route to control the sweeping robot to pass through the obstacle, when the type of the obstacle is a columnar type;
control a side brush on the sweeping robot to clean an internal corner in a specific motion mode, when the type of the obstacle is an internal corner type;
control the sweeping robot to sweep along an edge of an external corner, when the type of the obstacle is an external corner type;
determine whether the sweeping robot can climb over the obstacle of a current threshold type, when the type of the obstacle is a threshold type;
control a suction force of a fan on the sweeping robot to increase, and/or stop a mopping and water spraying function, when the type of the obstacle is a carpet edge or a gap type.

Optionally, laser angles emitted by different laser emitting components are the same or different.

Optionally, a lens of the image acquisition component is a direct-view lens, a panoramic reflective lens, a partially reflective lens or a periscope lens.

In a second aspect, an automatic control method of a sweeping robot is provided, which is used in the sweeping robot provided in the first aspect, and the method includes:
acquiring the target image collected by the image acquisition component;
acquiring the contour information of the obstacle, when there is the projection image of the projection point projected by the laser onto the obstacle in the target image;
determining the type of the obstacle indicated by the contour information; and
controlling the sweeping robot to clean according to the cleaning mode corresponding to the type of the obstacle.

Optionally, acquiring the contour information of the obstacle includes:
determining a distance between the projection point and a target image acquisition component based on a triangulation ranging method for each projection point projected onto the obstacle, the target image acquisition component being an image acquisition component which acquires the projection image of the projection point;
determining three-dimensional coordinates of the projection point relative to the target image acquisition component, according to the distance between the projection point and the target image acquisition component; and
determining the contour information of the obstacle based on the three-dimensional coordinates of a plurality of projection points on the obstacle.

Optionally, determining the distance between the projection point and the target image acquisition component based on the triangulation ranging method for each projection point projected onto the obstacle, includes:
acquiring a preset distance between the laser emitting head of a target laser emitting component which projects the projection point and the lens of the target image acquisition component;
acquiring an included angle between a first connection line and a second connection line, wherein the first connection line is a connection line between the target laser emitting component and the projection point, and the second connection line is a connection line between the laser emitting head of the target laser emitting component and the lens of the target image acquisition component;
acquiring a focal length of the target image acquisition component;
acquiring an imaging position of the projection image on the imaging component; and
calculating the distance between the projection point and the target image acquisition component, based on a principle of similar triangles, according to the preset distance, the included angle, the focal length and the imaging position.

Optionally, controlling the sweeping robot to clean according to the cleaning mode corresponding to the type of the obstacle, includes:
controlling the sweeping robot to enter an obstacle avoidance mode, when the type of the obstacle is a coil type or a wire type;
planning a traversable route to control the sweeping robot to pass through the obstacle, when the type of the obstacle is a columnar type;
controlling a side brush on the sweeping robot to clean an internal corner in a specific motion mode, when the type of the obstacle is an internal corner type;
controlling the sweeping robot to sweep along an edge of an external corner, when the type of the obstacle is an external corner type;
determining whether the sweeping robot can climb over the obstacle of a current threshold type, when the type of the obstacle is a threshold type;
controlling a suction force of a fan on the sweeping robot to increase, and/or stop a mopping and water spraying function, when the type of the obstacle is a carpet edge or a gap type.

In a third aspect, a computer-readable storage medium is provided. A program is stored in the storage medium. The program is loaded and executed by a processor to execute the automatic control method of the sweeping robot according to the second aspect.

The beneficial effect of the present application is that: by providing at least one laser emitting component disposed on the housing; by providing at least one image acquisition component disposed on the housing; by providing a processing component connected with each laser emitting component and each image acquisition component, and the processing component being adapted to acquire the target image collected by the image acquisition component; by acquiring a contour information of the obstacle when there is a projection image of a projection point where the laser is projected onto an obstacle in the target image; by determining a type of the obstacle indicated by the contour information; and by controlling the sweeping robot to clean according to a cleaning mode corresponding to the type of the obstacle, it can solve the problem that the existing sweeping robot uniformly adopts an obstacle avoidance strategy when detecting an obstacle, resulting in poor cleaning effect. Since the sweeping robot can adopt different cleaning modes according to different types of obstacles, instead of avoiding all obstacles and not sweeping, the sweeping effect of the sweeping robot can be improved.

The above description is only an overview of the technical solutions of the present application. In order to understand the technical means of the present application more clearly and implement them in accordance with the contents of the description, the preferred embodiments of the present application and the accompanying drawings are described in detail below.

### BRIEF DESCRIPTION OF DRAWINGS

FIG. 1 is a schematic structural view of a sweeping robot provided by an embodiment of the present application;
FIG. 2 is a schematic view of laser emitted by a laser emitting component provided by an embodiment of the present application;
FIG. 3 is a schematic view of laser emitted by a laser emitting component provided by another embodiment of the present application;
FIG. 4 is a schematic structural view of an image acquisition component provided by an embodiment of the present application;
FIG. 5 is a schematic view of a lens of an image acquisition component provided by an embodiment of the present application;
FIG. 6 is a schematic view of a lens of an image acquisition component provided by another embodiment of the present application;
FIG. 7 is a schematic view of a lens of an image acquisition component provided by another embodiment of the present application;
FIG. 8 is a schematic view of a lens of an image acquisition component provided by another embodiment of the present application;
FIG. 9 is a schematic view of a positional relationship between the image acquisition component and the laser emitting component provided by a first embodiment of the present application;
FIG. 10 is a schematic view of a positional relationship between the image acquisition component and the laser emitting component provided by a second embodiment of the present application;
FIG. 11 is a schematic view of a positional relationship between the image acquisition component and the laser emitting component provided by a third embodiment of the present application;
FIG. 12 is a schematic view of a positional relationship between the image acquisition component and the laser emitting component provided by a fourth embodiment of the present application;
FIG. 13 is a schematic view of measuring a distance of a transmission point based on a triangulation ranging method provided by an embodiment of the present application; and
FIG. 14 is a flowchart of an automatic control method for the sweeping robot provided by an embodiment of the present application.

### DETAILED DESCRIPTION

The specific implementations of the present application will be described in further detail below with reference to the accompanying drawings and embodiments. The following examples are adapted to illustrate the present application, but are not intended to limit the scope of the present application.

It should be noted that the detailed description set forth in connection with the accompanying drawings is intended as a description of various configurations and is not intended to represent the only configurations in which the concepts described herein may be practiced. Apparatus embodiments and method embodiments described herein are described in the following detailed description and illustrated in the accompanying drawings by various blocks, modules, units, components, circuits, steps, processes, algorithms, etc., (collectively referred to as "elements") are shown. These elements may be implemented using electronic hardware, computer software, or any combination thereof. Whether these elements are implemented as hardware or software depends on the specific application and design constraints imposed on the overall system. If terms such as "first" and "second" are used in the description and claims of the present application and the drawings in the description, such descriptions are adapted to distinguish different objects, rather than to describe a specific order.

It is to be understood that, when used in this specification and the appended claims, the terms "including" and "comprising" indicate the presence of the described features, integers, steps, operations, elements and/or components, but do not exclude the presence or addition of one or more other features, integers, steps, operations, elements, components and/or sets thereof. It should also be understood that the terminology used in the specification of the application herein is for the purpose of describing particular embodiments only and is not intended to limit the application. As used in this specification and the appended claims, the singular forms "a", "an" and "the" are intended to include the plural unless the context clearly dictates otherwise. It should also be further understood that, as used in this specification and the appended claims, the term "and/or" refers to and including any and all possible combinations of one or more of the associated listed items.

It should be noted that, in the absence of an explicit special description, each technical feature in each embodiment of the present application can be regarded as being capable of being combined with each other, as long as the combination is not impossible to implement due to technical reasons. In order to describe the present application more fully, some exemplary, optional, or preferred features are described in combination with other technical features in each embodiment of the present application. However, this combination is not necessary, and it should be understood that the exemplary, optional, or preferred features and other technical features are separable or independent from each other, as long as such separability or independence is not due to technical for reasons that cannot be implemented. Some functional descriptions of technical features in the method embodiments may be understood as performing the functions, methods or steps. Some functional descriptions of technical features in an apparatus embodiment may be understood as using such apparatus to perform the functions, methods or steps.

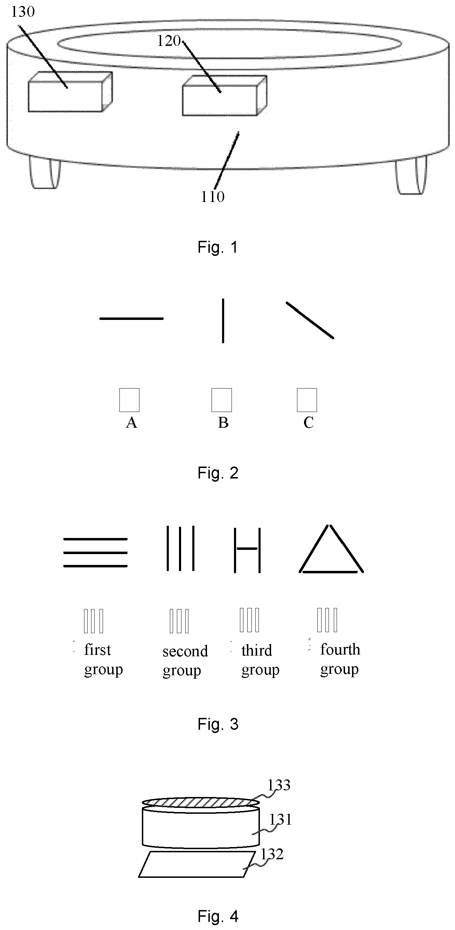

FIG. 1 is a schematic structural view of a sweeping robot provided by an embodiment of the present application. As shown in FIG. 1, the sweeping robot at least includes:
a housing 110;
at least one laser emitting component 120 disposed on the housing 110, each laser emitting component 120 being adapted to project laser in a travel direction;
at least one image acquisition component 130 disposed on the housing 110, each image acquisition component 130 being adapted to acquire a target image in the travel direction;
a processing component 140 (not shown in FIG. 1) connected with each laser emitting component 120 and each image acquisition component 130, the processing component 140 being adapted to acquire the target image collected by the image acquisition component 130; when there is a projection image of a projection point where the laser is projected onto an obstacle in the target image, a contour information of the obstacle is acquired; a type of the obstacle indicated by the contour information is determined; and the sweeping robot is controlled to clean according to a cleaning mode corresponding to the type of the obstacle.

Wherein, the travel direction may be a direction in which the sweeping robot is traveling. For example, if the sweeping robot moves backward, the travel direction of the sweeping robot is backward. Alternatively, the travel direction may also be a direction in which a stationary sweeping robot is about to travel.

Optionally, the laser emitting component 120 may be a helium-neon laser, an argon ion laser, a gallium arsenide semiconductor laser, or the like, and the type of the laser emitting component 120 is not limited in this embodiment. The laser projected by the laser emitting component 120 is a laser beam (or a linear laser).

Optionally, the laser beam irradiates all the 180-degree horizontal range in front of the sweeping robot, so that the obstacles in the left, middle, and right range in front of the sweeping robot can be detected, and the detection range is more comprehensive. The laser beam enables the detection of obstacles in the middle and lower positions in the numerical direction, so that the obstacles located on the ground and with lower heights can also be detected, such as door sills, carpet edges, steps, floor tile gaps, etc.

Optionally, there may be one or more laser emitting components 120. For each laser emitting component 120, the laser emitted by the laser emitting component 120 can be parallel to the horizontal plane (refer to the laser emitted by the laser emitting component A in FIG. 2), vertical to the horizontal plane (refer to the laser emitted by the laser emitting component B in FIG. 2), or intersect with the horizontal plane (refer to the laser emitted by the laser emitting component C in FIG. 2). This embodiment does not limit angles of the laser emitted by the laser emitting component 120.

When the number of laser emitting components 120 is at least two, the laser angles emitted by different laser emitting components 120 are the same or different. For example, referring to the lasers emitted by four groups of laser emitting components 120 in FIG. 3, for the first group of laser emitting components 120, each laser emitting component 120 emits laser at the same angle, and the emitted laser is parallel to the horizontal plane; for the second group of laser emitting components 120, each laser emitting component 120 emits laser at the same angle, and the emitted laser is perpendicular to the horizontal plane; for the third group of laser emitting components 120, the first laser emitting component and the third laser emitting component emit the laser at the same angle (the laser is perpendicular to the horizontal plane), and the first laser emitting component and the second laser emitting component emit the laser at a different angle (the laser is horizontal to the horizontal plane); and for the fourth group of laser emitting components 120, the angles at which the first laser emitting component, the second laser emitting component and the third laser emitting component emit laser are different.

Each laser emitting component 120 includes a laser emitting head that emits laser. Of course, the laser emitting component 120 also includes other components required in the laser emitting process, such as a laser generating component, a photon accelerating component, etc., which will not be described in detail in this embodiment.

Optionally, the image acquisition component 130 may be a miniature video camera, a camera, or the like, and the type of the image acquisition component 130 is not limited in this embodiment.

Referring to FIG. 4, the image acquisition component 130 includes a lens 131 and an imaging component 132.

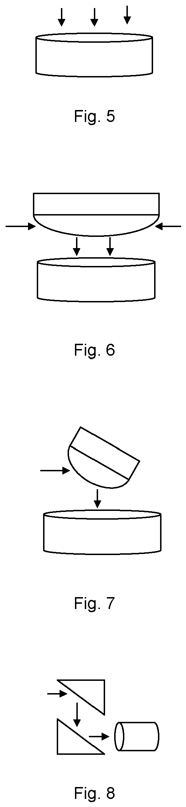

Optionally, the lens 131 includes, but is not limited to, the following types: a direct-view lens, a panoramic reflective lens, a partially reflective lens or a periscope lens. Referring to FIG. 5, the direct-view lens refers to a lens that supports direct incidence of light. Referring to FIG. 6, the panoramic reflective lens refers to a lens in which light rays of different angles are incident after being reflected once. Referring to FIG. 7, the partially reflective lens refers to a lens in which light at a specified angle is reflected once and then incident. Referring to FIG. 8, the periscope lens refers to a lens in which light is incident after at least two reflections. A band-pass filter 133 is provided on the lens 131. The band-pass filter 133 makes the image acquisition component 130 visible only to the laser emitted by the laser emitting component 120.

Optionally, the imaging component 132 may be a Complementary Metal Oxide Semiconductor (CMOS) sensor; or, a Charge Coupled Device (CCD), etc. The type of the imaging component 132 is not limited in this embodiment.

The number of image acquisition components 130 is one or more. Optionally, both the image acquisition component 130 and the laser emitting component 120 are disposed on a side of the housing 110. The image acquisition component 130 may be positioned above the laser emitting component 120. Alternatively, the image acquisition component 130 may also be located below the laser emitting component 120. Alternatively, the image acquisition components 130 and the laser emitting components 120 are alternately arranged on the same horizontal plane. This embodiment does not limit the arrangement of the image acquisition component 130 and the laser emitting component 120.

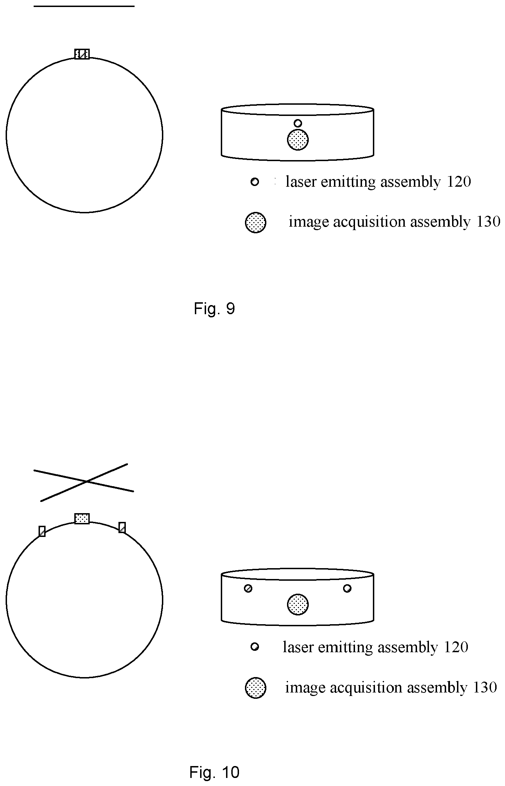

In a first embodiment, referring to FIG. 9, the number of both the laser emitting component 120 and the image acquisition component 130 is one; the image acquisition component 130 and the laser emitting component 120 are both disposed on the side of the housing 110; and the laser emitting component 120 is disposed directly above the image acquisition component 130.

In a second embodiment, referring to FIG. 10, the number of laser emitting components 120 is two, and the number of image acquisition components 130 is one; the image acquisition component 130 and the laser emitting component 120 are both disposed on the side of the housing 110; one laser emitting component 120 is arranged on an upper left of the image acquisition component 130, and the other laser emitting component 120 is arranged on an upper right of the image acquisition component 130.

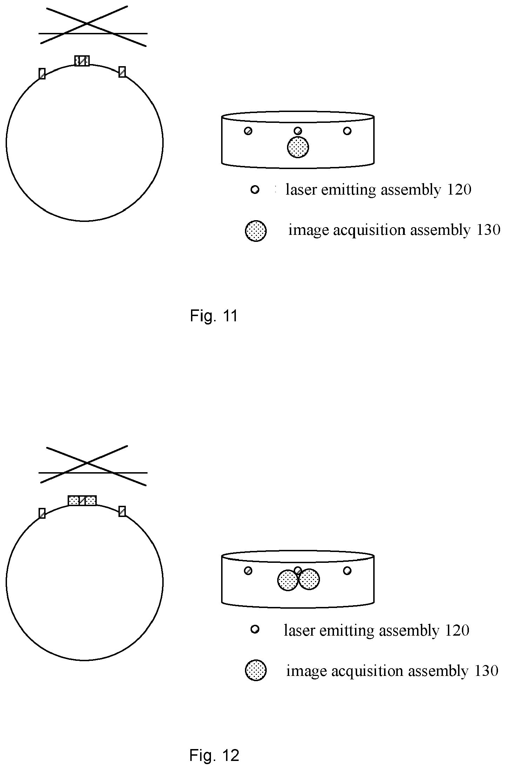

In a third embodiment, referring to FIG. 11, the number of laser emitting components 120 is three, and the number of image acquisition components 130 is one; the image acquisition component 130 and the laser emitting component 120 are both disposed on the side of the housing 110; a first laser emitting component 120 is disposed on the upper left of the image acquisition component 130, a second laser emitting component 120 is disposed directly above the image acquisition component 130 , and a third laser emitting component 120 is disposed on an upper right of the image acquisition component 130.

In a fourth embodiment, referring to FIG. 12, the number of the laser emitting components 120 is three; the number of image acquisition components 130 is two; and the image acquisition component 130 and the laser emitting component 120 are both disposed on the side of the housing 110. The three laser emitting components 120 are arranged above the two image acquisition components 130.

In this embodiment, the laser emitting component 120 and the image acquisition component 130 work under the control of the processing component 140. The processing component 140 controls the laser emitting component 120 to emit laser. If there is an obstacle in front of the laser irradiating process, the irradiating direction of the laser is changed, and a projection point is projected on the obstacle. At this time, the target image collected by the image acquisition component 130 includes the projection image of the projection point. Correspondingly, the processing component 140 acquires the target image acquired by the image acquisition component 130, and performs image analysis according to the projection image in the target image to acquire a distance of the obstacle. Optionally, if there is no obstacle in front of the laser irradiation process, the irradiation direction of the laser does not change, and the projection point is not projected on the obstacle. At this time, the target image collected by the image acquisition component 130 does not include the projection image of the projection point.

In an embodiment, when a plurality of laser emitting components 120 are provided, the processing component 140 controls the plurality of the laser emitting components 120 to be turned on in sequence for a certain period of time. For example, when the number of laser emitting components 120 is two, the processing component 140 controls a first laser emitting component 120 to be turned on first; when the turn-on time reaches 0.5s, the first laser emitting component 120 is controlled to turn off and a second laser emitting component 120 is turned on; when the time when the second laser emitting component 120 is turned on reaches 0.5s, the second laser emitting component 120 is controlled to be turned off, and then the first laser emitting component 120 is controlled to be turned on, and the cycle is repeated.

In another embodiment, when a plurality of laser emitting components 120 are provided, the processing component 140 divides the plurality of the laser emitting components 120 into multiple groups, and controls the laser emitting components 120 of the multiple groups to be turned on for a certain period of time, respectively. For example, when the number of groups of laser emitting components 120 is two (each group includes two laser emitting components), and the processing component 140 controls a first group of laser emitting components 120 to turn on first; when the turn-on time reaches 0.5s, the first group of laser emitting components 120 is controlled to turn off and a second group of laser emitting components 120 are turned on; when the time when the second group of laser emitting components 120 is turned on reaches 0.5s, the second group of laser emitting components 120 are controlled to be turned off, and then the first group of laser emitting components 120 are controlled to be turned on, and the cycle is repeated.

Optionally, when there is a projection image of the projection point projected by the laser onto the obstacle in the target image, the processing component 140 acquiring the contour information of the obstacle includes: determining a distance between the projection point and a target image acquisition component based on a triangulation ranging method for each projection point projected onto the obstacle; determining three-dimensional coordinates of the projection point relative to the target image acquisition component, according to the distance between the projection point and the target image acquisition component; and determining the contour information of the obstacle based on the three-dimensional coordinates of a plurality of projection points on the obstacle. The target image acquisition component is an image acquisition component which acquires the projection image of the projection point.

Illustratively, the image acquisition component includes a lens and an imaging component. The laser emitting component includes a laser emitting head. For each projection point projected onto the obstacle, the processing component determining a distance between the projection point and the target image acquisition component based on the triangulation ranging method, includes: acquiring a preset distance between the laser emitting head of a target laser emitting component which projects the projection point and the lens of the target image acquisition component; acquiring an included angle between a first connection line and a second connection line; acquiring a focal length of the target image acquisition component; acquiring an imaging position of the projection image on the imaging component; and calculating the distance between the projection point and the target image acquisition component, based on a principle of similar triangles, according to the preset distance, the included angle, the focal length and the imaging position.

Wherein, the first connection line is a connection line between the target laser emitting component and the projection point, and the second connection line is a connection line between the laser emitting head of the target laser emitting component and the lens of the target image acquisition component.

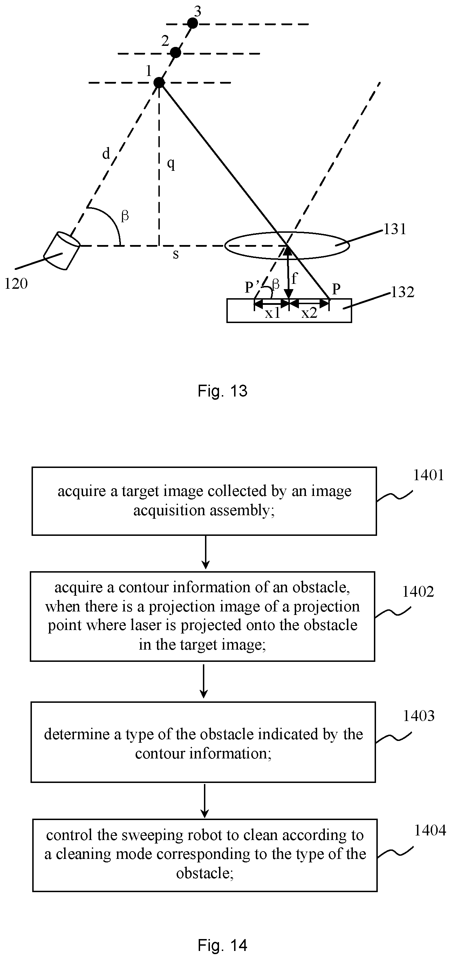

Referring to a schematic view of the three projection points projected by the target laser emitting component onto the obstacle shown in FIG. 13, for each projection point (in FIG. 13, the projection point 1 is used as an example), the laser head and the lens of the target image acquisition component are on the second connection line, and the preset distance is s, the focal length of the image acquisition component 130 is f, and the included angle between the first connection line and the second connection line is β. The imaging position of the projection image on the imaging component is P. Similar triangles can be made by geometric knowledge, and the laser head, lens and projection point form a triangle. This triangle is similar to a triangle formed by the lens, P and an auxiliary point P'.

Let PP'=x, then f/x=q/s; thus, q=f*s/x.

Wherein, x=x1+x2=f/tanβ+ pixel Size* position.

Wherein, the pixel Size is a size of a pixel unit, and the position is a position of pixel coordinates of the projection image relative to an imaging center.

The value of q can be calculated from the above formula. d=q/sinβ. Based on the cosine theorem, the distance between the projection point and the target image acquisition component can be calculated according to d, s and β.

Afterwards, the processing component 140 may determine the three-dimensional coordinates of the projection point based on the position of the target acquisition component. Then, the contour information of the obstacle is determined according to the three-dimensional coordinates of the multiple projection points.

Optionally, in this embodiment, the multiple projection points on the obstacle include, but are not limited to, at least one of the following: a plurality of projection points generated by a plurality of laser emitting components projecting laser onto the obstacle; a plurality of projection points generated by a same laser emitting component projecting laser onto a plurality of surfaces of the obstacle; and a plurality of projection points generated by the laser emitting component projecting laser onto the obstacle from different angles, after the sweeping robot drives the same laser emitting component to move.

Optionally, the processing component 140 determining the type of obstacle indicated by the outline information, includes: comparing the outline information of the obstacle with characteristic information of various types of obstacles; and determining the type of obstacle corresponding to the characteristic information that matches the contour information of the obstacle as the obstacle type indicated by the contour information.

Among them, the type of obstacle is determined according to the obstacles encountered in the working process of the sweeping robot. Illustratively, the types of obstacles include, but are not limited to, at least one of the following: coil type, wire type, column type, internal corner type, external corner type, threshold type, carpet edge, slot type, and the like.

Optionally, the processing component 140 controlling the sweeping robot to clean according to the cleaning mode corresponding to the type of obstacle, includes: controlling the sweeping robot to enter an obstacle avoidance mode, when the type of the obstacle is a coil type or a wire type; planning a traversable route to control the sweeping robot to pass through the obstacle, when the type of the obstacle is a columnar type; controlling a side brush on the sweeping robot to clean an internal corner in a specific motion mode, when the type of the obstacle is an internal corner type; controlling the sweeping robot to sweep along an edge of an external corner, when the type of the obstacle is an external corner type; determining whether the sweeping robot can climb over the obstacle of a current threshold type, when the type of the obstacle is a threshold type; controlling a suction force of a fan on the sweeping robot to increase, and/or stop a mopping and water spraying function, when the type of the obstacle is a carpet edge or a gap type.

Wherein, the specific movement mode of the side brush may be n times of reciprocating shaking, where n is a positive integer.

Optionally, when the type of obstacle is a carpet edge or a gap type, if the suction force of the fan of the sweeping robot has reached the maximum value and the mopping and water spraying function is enabled, the mopping and water spraying function is stopped; if the suction force of the fan of the sweeping robot does not reach the maximum value and the mopping and water spraying function is enabled, the fan suction force is increased and the mopping and water spraying function is stopped; and if the fan suction of the robot vacuum does not reach the maximum value and the mopping and water spraying function is turned off, the fan suction is increased.

Wherein, the columnar type obstacle may be a table leg, a chair leg, a sofa leg, etc. This embodiment does not limit the columnar type obstacle.

Of course, the above types of obstacles and corresponding cleaning modes are only schematic. In actual implementation, the type of obstacle can also correspond to other cleaning modes. The corresponding relationship between the obstacle type and the cleaning mode can be set in the sweeping robot by default or can be set by the user. This embodiment does not limit the setting manner of the correspondence between the obstacle type and the cleaning mode.

In summary, by providing at least one laser emitting component disposed on the housing; by providing at least one image acquisition component disposed on the housing; by providing a processing component connected with each laser emitting component and each image acquisition component, and the processing component being adapted to acquire the target image collected by the image acquisition component; by acquiring a contour information of the obstacle when there is a projection image of a projection point where the laser is projected onto an obstacle in the target image; by determining a type of the obstacle indicated by the contour information; and by controlling the sweeping robot to clean according to a cleaning mode corresponding to the type of the obstacle, the sweeping robot provided by this embodiment can solve the problem that the existing sweeping robot uniformly adopts an obstacle avoidance strategy when detecting an obstacle, resulting in poor cleaning effect. Since the sweeping robot can adopt different cleaning modes according to different types of obstacles, instead of avoiding all obstacles and not sweeping, the sweeping effect of the sweeping robot can be improved.

FIG. 14 is a flowchart of an automatic control method for a sweeping robot provided by an embodiment of the present application. This embodiment is described by taking as an example that the method is applied to the sweeping robot shown in the above embodiments, and the execution subject of each step is the processing component 140 in the sweeping robot. The method includes at least the following steps:
step 1401: acquiring a target image collected by the image acquisition component.
   Optionally, the processing component periodically reads the target image collected by the image acquisition component; or, every time the image acquisition component captures a target image, the target image is sent to the processing component.
step 1402, acquiring the contour information of the obstacle, when there is a projection image of a projection point where the laser is projected onto the obstacle in the target image.

Optionally, for each projection point projected onto the obstacle, a distance between the projection point and a target image acquisition component is determined based on a triangulation ranging method for each projection point projected onto the obstacle, the target image acquisition component is an image acquisition component which acquires the projection image of the projection point; three-dimensional coordinates of the projection point relative to the target image acquisition component are determined, according to the distance between the projection point and the target image acquisition component; and the contour information of the obstacle based on the three-dimensional coordinates of a plurality of projection points on the obstacle is determined.

Wherein, determining the distance between the projection point and the target image acquisition component based on the triangulation ranging method for each projection point projected onto the obstacle, includes: acquiring a preset distance between the laser emitting head of a target laser emitting component which projects the projection point and the lens of the target image acquisition component; acquiring an included angle between a first connection line and a second connection line, wherein the first connection line is a connection line between the target laser emitting component and the projection point, and the second connection line is a connection line between the laser emitting head of the target laser emitting component and the lens of the target image acquisition component; acquiring a focal length of the target image acquisition component; acquiring an imaging position of the projection image on the imaging component; and calculating the distance between the projection point and the target image acquisition component, based on a principle of similar triangles, according to the preset distance, the included angle, the focal length and the imaging position.

The description of the steps refers to the above-mentioned embodiments of the sweeping robot, which is not repeated here in this embodiment.
step 1403: determining the type of obstacle indicated by the contour information.

Optionally, the processing component 140 compares the outline information of the obstacle with characteristic information of various types of obstacles; and determines the type of obstacle corresponding to the characteristic information that matches the contour information of the obstacle as the obstacle type indicated by the contour information.
step 1404, controlling the sweeping robot to clean according to the cleaning mode corresponding to the type of obstacle.

Optionally, when the type of the obstacle is a coil type or a wire type, the sweeping robot is controlled to enter an obstacle avoidance mode; when the type of the obstacle is a columnar type, a traversable route is planned to control the sweeping robot to pass through the obstacle; when the type of the obstacle is an internal corner type, a side brush on the sweeping robot is controlled to clean an internal corner in a specific motion mode; when the type of the obstacle is an external corner type, the sweeping robot is controlled to sweep along an edge of an external corner; when the type of the obstacle is a threshold type, whether the sweeping robot can climb over the obstacle of a current threshold type is determined; when the type of the obstacle is a carpet edge or a gap type, a suction force of a fan on the sweeping robot is controlled to increase.

The description of the steps refers to the above-mentioned embodiments of the sweeping robot, which is not repeated here in this embodiment.

In summary, by acquiring the target image collected by the image acquisition component; by acquiring a contour information of the obstacle when there is a projection image of a projection point where the laser is projected onto an obstacle in the target image; by determining a type of the obstacle indicated by the contour information; and by controlling the sweeping robot to clean according to a cleaning mode corresponding to the type of the obstacle, the automatic control method of the sweeping robot provided by this embodiment can solve the problem that the existing sweeping robot uniformly adopts an obstacle avoidance strategy when detecting an obstacle, resulting in poor cleaning effect. Since the sweeping robot can adopt different cleaning modes according to different types of obstacles, instead of avoiding all obstacles and not sweeping, the sweeping effect of the sweeping robot can be improved.

Optionally, the present application further provides a computer-readable storage medium. A program is stored in the computer-readable storage medium. The program is loaded and executed by the processor to realize the automatic control method of the sweeping robot according to the above method embodiment.

Optionally, the present application also provides a computer product. The computer product includes a computer-readable storage medium. A program is stored in the computer-readable storage medium. The program is loaded and executed by the processor to realize the automatic control method of the sweeping robot according to the above method embodiment.

The technical features of the above-described embodiments can be combined arbitrarily. In order to simplify the description, all possible combinations of the technical features in the above embodiments are not described. However, as long as there is no contradiction in the combination of these technical features, they should be considered to be within the scope of the description in this specification.

The above-mentioned embodiments only represent several embodiments of the present application, and the descriptions thereof are specific and detailed, but should not be construed as a limitation on the scope of this patent. It should be noted that, for those skilled in the art, without departing from the concept of the present application, several modifications and improvements can be made, which all belong to the protection scope of the present application. Therefore, the scope of protection of the patent of the present application shall be subject to the appended claims.

## Claims

1. A sweeping robot, comprising:
a housing;
at least one laser emitting component disposed on the housing, each laser emitting component being adapted to project laser in a travel direction;
at least one image acquisition component disposed on the housing, each image acquisition component being adapted to acquire a target image in the travel direction;
a processing component connected with each laser emitting component and each image acquisition component, the processing component being adapted to acquire the target image collected by the image acquisition component; when there is a projection image of a projection point where the laser is projected onto an obstacle in the target image, a contour information of the obstacle is acquired; a type of the obstacle indicated by the contour information is determined; and the sweeping robot is controlled to clean according to a cleaning mode corresponding to the type of the obstacle.

2. The sweeping robot according to claim 1, wherein the processing component is adapted to:
determine a distance between the projection point and a target image acquisition component based on a triangulation ranging method for each projection point projected onto the obstacle, the target image acquisition component is an image acquisition component which acquires the projection image of the projection point;
determine three-dimensional coordinates of the projection point relative to the target image acquisition component, according to the distance between the projection point and the target image acquisition component; and
determine the contour information of the obstacle based on the three-dimensional coordinates of a plurality of the projection points on the obstacle.

3. The sweeping robot according to claim 2, wherein the image acquisition component comprises a lens and an imaging component, the laser emitting component comprises a laser emitting head;
for each projection point projected onto the obstacle, the processing component is adapted to:
acquire a preset distance between the laser emitting head of a target laser emitting component which projects the projection point and the lens of the target image acquisition component;
acquire an included angle between a first connection line and a second connection line, wherein the first connection line is a connection line between the target laser emitting component and the projection point, and the second connection line is a connection line between the laser emitting head of the target laser emitting component and the lens of the target image acquisition component;
acquire a focal length of the target image acquisition component;
acquire an imaging position of the projection image on the imaging component; and
calculate the distance between the projection point and the target image acquisition component, based on a principle of similar triangles, according to the preset distance, the included angle, the focal length and the imaging position.

4. The sweeping robot according to claim 2, wherein the plurality of the projection points on the obstacle comprise:
a plurality of projection points generated by a plurality of laser emitting components projecting laser onto the obstacle; and/or
a plurality of projection points generated by a same laser emitting component projecting laser onto a plurality of surfaces of the obstacle; and/or
a plurality of projection points generated by the laser emitting component projecting laser onto the obstacle from different angles, after the sweeping robot drives the same laser emitting component to move.

5. The sweeping robot according to claim 1, wherein the processing component is adapted to:
control the sweeping robot to enter an obstacle avoidance mode, when the type of the obstacle is a coil type or a wire type;
plan a traversable route to control the sweeping robot to pass through the obstacle, when the type of the obstacle is a columnar type;
control a side brush on the sweeping robot to clean an internal corner in a specific motion mode, when the type of the obstacle is an internal corner type;
control the sweeping robot to sweep along an edge of an external corner, when the type of the obstacle is an external corner type;
determine whether the sweeping robot can climb over the obstacle of a current threshold type, when the type of the obstacle is a threshold type;
control a suction force of a fan on the sweeping robot to increase, and/or stop a mopping and water spraying function, when the type of the obstacle is a carpet edge or a gap type.

6. The sweeping robot according to any one of claims 1 to 5, wherein laser angles emitted by different laser emitting components are the same or different.

7. The sweeping robot according to any one of claims 1 to 5, wherein a lens of the image acquisition component is a direct-view lens, a panoramic reflective lens, a partially reflective lens or a periscope lens.

8. An automatic control method for a sweeping robot, which is used in the sweeping robot according to any one of claims 1 to 7, the method comprising:
acquiring the target image collected by the image acquisition component;
acquiring the contour information of the obstacle, when there is the projection image of the projection point projected by the laser onto the obstacle in the target image;
determining the type of the obstacle indicated by the contour information; and
controlling the sweeping robot to clean according to the cleaning mode corresponding to the type of the obstacle.

9. The automatic control method according to claim 8, wherein acquiring the contour information of the obstacle comprises:
determining a distance between the projection point and a target image acquisition component based on a triangulation ranging method for each projection point projected onto the obstacle, the target image acquisition component being an image acquisition component which acquires the projection image of the projection point;
determining three-dimensional coordinates of the projection point relative to the target image acquisition component, according to the distance between the projection point and the target image acquisition component; and
determining the contour information of the obstacle based on the three-dimensional coordinates of a plurality of projection points on the obstacle.

10. The automatic control method according to claim 9, wherein determining the distance between the projection point and the target image acquisition component based on the triangulation ranging method for each projection point projected onto the obstacle, comprises:
acquiring a preset distance between the laser emitting head of a target laser emitting component which projects the projection point and the lens of the target image acquisition component;
acquiring an included angle between a first connection line and a second connection line, wherein the first connection line is a connection line between the target laser emitting component and the projection point, and the second connection line is a connection line between the laser emitting head of the target laser emitting component and the lens of the target image acquisition component;
acquiring a focal length of the target image acquisition component;
acquiring an imaging position of the projection image on the imaging component; and
calculating the distance between the projection point and the target image acquisition component, based on a principle of similar triangles, according to the preset distance, the included angle, the focal length and the imaging position.

11. The automatic control method according to claim 8, wherein controlling the sweeping robot to clean according to the cleaning mode corresponding to the type of the obstacle, comprises:
controlling the sweeping robot to enter an obstacle avoidance mode, when the type of the obstacle is a coil type or a wire type;
planning a traversable route to control the sweeping robot to pass through the obstacle, when the type of the obstacle is a columnar type;
controlling a side brush on the sweeping robot to clean an internal corner in a specific motion mode, when the type of the obstacle is an internal corner type;
controlling the sweeping robot to sweep along an edge of an external corner, when the type of the obstacle is an external corner type;
determining whether the sweeping robot can climb over the obstacle of a current threshold type, when the type of the obstacle is a threshold type; and
controlling a suction force of a fan on the sweeping robot to increase, and/or stop a mopping and water spraying function, when the type of the obstacle is a carpet edge or a gap type.
